Europäisches Patentamt

**European Patent Office**

Office européen des brevets

(11) Numéro de publication: **0 024 230**
**A1**

# (12) DEMANDE DE BREVET EUROPEEN

(21) Numéro de dépôt: **80401136.9**

(22) Date de dépôt: **31.07.80**

(51) Int. Cl.³: **B 01 L 3/02**

(30) Priorité: **17.08.79 FR 7920849**

(43) Date de publication de la demande:
**25.02.81 Bulletin 81/8**

(84) Etats Contractants Désignés:
**BE CH DE GB IT LI NL SE**

(71) Demandeur: **COMMISSARIAT A L'ENERGIE ATOMIQUE
Etablissement de Caractère Scientifique Technique et
Industriel
B.P. 510
F-75752 Paris Cedex 15(FR)**

(72) Inventeur: **de Cosnac, Bertrand
11 bis, Avenue Mac Mahon
F-75017 Paris(FR)**

(72) Inventeur: **Gaucher, Jean-Claude
Chemin de la Vieuville
F-91530 le Val Saint Germain(FR)**

(72) Inventeur: **Lansiart, Alain
2, rue de la Source Perdue
F-91190 Gif Sur Yvette(FR)**

(74) Mandataire: **Mongredien, André et al,
c/o Brevatome 25, rue de Ponthieu
F-75008 Paris(FR)**

(54) Dispositif microdoseur de liquides.

(57) Dispositif microdoseur de liquides.
Ce dispositif se caractérise en ce qu'il comprend un réservoir (1) contenant le liquide (2) à doser, un tube capillaire (30) alimenté par ce réservoir, un transducteur (5) transmettant des vibrations ultrasonores au tube capillaire (30), des moyens (7) pour charger électriquement les gouttelettes de liquide issues du tube capillaire et des moyens électriques de déviation (10, 11) de ces gouttelettes en direction d'un alvéole de réception (9), des moyens (13) aptes à arrêter la déviation des gouttelettes lorsqu'un nombre prédéterminé de celles-ci est parvenu dans l'alvéole.
Application en médecine aux dosages de quantités de liquide de l'ordre du microlitre.

EP 0 024 230 A1

La présente invention concerne un dispositif microdoseur de liquides. Elle s'applique aux dosages de liquides et notamment à l'analyse d'échantillons médicaux, grâce à des liquides réactifs dosés avec une très grande précision.

Pour le dosage de liquides, en particulier dans le domaine médical, il serait nécessaire de pouvoir doser rapidement et en série, des volumes de liquide de l'ordre du microlitre. Les dispositifs existants ne permettent pas de tels dosages.

L'invention a pour but de remédier à cet inconvénient et notamment de réaliser un dispositif microdoseur de liquides dans lequel des gouttelettes de liquide à doser doivent être dirigées vers différents alvéoles, par volumes de l'ordre du microlitre. Dans le domaine médical par exemple, des échantillons sont contenus dans les alvéoles et des gouttelettes de liquide réactif produites par un tube capillaire alimenté par un réservoir, sont envoyées vers les différents alvéoles. Le débit connu de ces gouttelettes permet de régler les durées pendant lesquelles chaque alvéole devra recevoir des gouttelettes, en fonction de la quantité de réactif nécessaire à l'analyse à réaliser dans chacun des alvéoles. Le tube capillaire est alimenté par un réservoir contenant le réactif, ce réservoir étant étanche et étant alimenté par un fluide gazeux à pression réglable. La formation de gouttelettes à la sortie du tube capillaire est favorisée par l'application à ce tube d'ondes ultrasonores provenant d'un transducteur ultrasonore ; le volume de chaque gouttelette dépend de la pression dans le réservoir et de la fréquence de l'onde ultrasonore. Le nombre de gouttelettes par unité de temps dépend de la fréquence ultrasonore; à chaque période de l'onde ultrasonore se forme une et une seule gouttelette.

B 6754.3 DC

Chaque gouttelette qui sort du tube capillaire est chargée électriquement par une impulsion appliquée à un anneau traversé par les gouttelettes à charger. Après cette charge, les gouttelettes passent entre des plaques déflectrices auxquelles sont appliqués des potentiels électriques continus, de manière à atteindre l'alvéole souhaité.

Le dispositif de l'invention permet de contrôler rigoureusement la quantité de gouttelettes d'un liquide à doser et qui doit parvenir dans un alvéole dont la position est prédéterminée.

L'invention a pour objet un dispositif microdoseur de liquides, caractérisé en ce qu'il comprend un réservoir étanche contenant le liquide à doser, un tube capillaire alimenté par ce réservoir, des moyens d'alimentation réglables du réservoir en fluide gazeux sous pression, un transducteur ultrasonore transmettant des vibrations ultrasonores au tube capillaire, un générateur ultrasonore à fréquence réglable alimentant ce transducteur, des moyens pour charger électriquement les gouttelettes de liquide issues du tube capillaire et des moyens électriques de déviation de ces gouttelettes en direction d'au moins un alvéole de réception, et des moyens réglables de comptage aptes à arrêter la déviation des gouttelettes lorsqu'un nombre prédéterminé de celles-ci est parvenu dans ledit alvéole.

Selon une autre caractéristique de l'invention et dans un premier mode de réalisation de celle-ci, les moyens réglables de comptage sont constitués par un compteur présentant une entrée de réglage dudit nombre prédéterminé de gouttelettes, et une sortie de commande desdits moyens pour charger électriquement les gouttelettes pour arrêter cette charge lorsque le nombre prédéterminé est atteint.

B 6754.3 DC

Selon une autre caractéristique de l'invention et dans un second mode de réalisation de celle-ci, les moyens réglables de comptage sont constitués par un compteur présentant une entrée de réglage dudit nombre prédéterminé de gouttelettes, et une sortie de commande desdits moyens électriques pour dévier les gouttelettes en direction dudit alvéole.

Enfin, selon une caractéristique avantageuse de l'invention, le dispositif comprend une pluralité d'alvéoles de réception, répartis sur un transporteur, et des moyens de commande de la position de ce transporteur en fonction de la position de chaque alvéole sur le transporteur et du nombre de gouttelettes devant parvenir dans chaque alvéole.

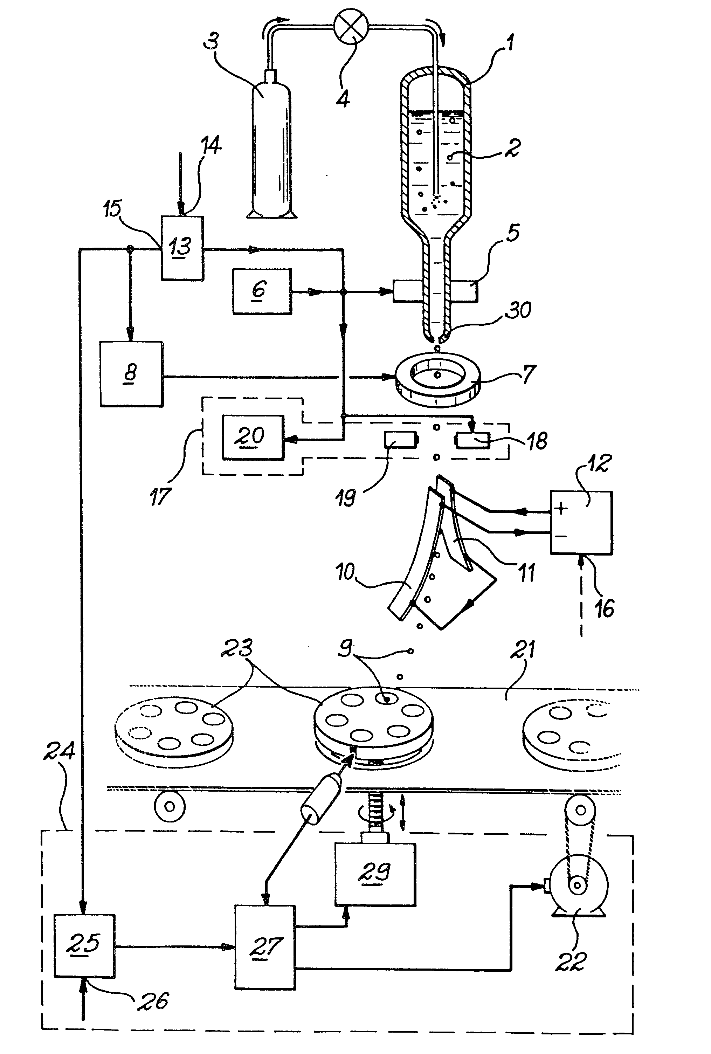

D'autres caractéristiques et avantages de l'invention ressortiront mieux de la description qui va suivre, donnée en référence à la figure schématique unique annexée, représentant un mode de réalisation d'un dispositif microdoseur de liquides, conforme à l'invention.

En référence à la figure unique, on a représenté un dispositif microdoseur de liquides, conforme à l'invention. Ce dispositif comprend un réservoir étanche 1 contenant le liquide 2 à doser. Un tube capillaire 30 est alimenté par ce réservoir qui est lui-même relié à des moyens 3 d'alimentation en fluide gazeux sous pression, réglable par exemple par l'intermédiaire d'un détendeur 4. L'arrivée du fluide gazeux sous pression, dans le réservoir se fait de préférence en-dessous du niveau du liquide dans le réservoir. Le dispositif comprend également un transducteur ultrasonore 5 relié à un générateur ultrasonore à fréquence réglable 6, et permettant d'appliquer au tube capillaire des vibrations favorisant la formation de gouttelettes à la sortie du tube capillaire. La pression dans le réservoir et la dimension de l'orifice du tube capillaire permettent de contrôler le volume de chaque gouttelette. Ces gouttelettes sont ensuite chargées électriquement grâce à des moyens constitués par un anneau 7 et un générateur électrique d'impulsions permettant d'appliquer à chacune des gouttelettes une impulsion d'un champ champ électrique de valeur prédéterminée. A la sortie de l'anneau 7, les gouttelettes ainsi chargées, traversent des moyens électriques de déviation, en direction d'un alvéole de réception 9. Ces moyens électriques de déviation peuvent être constitués de manière connue, par deux plaques déflectrices 10, 11, reliées respectivement aux bornes de sortie d'un générateur 12, permettant de leur appliquer une différence de potentiel prédéterminée. A titre d'exemple, la plaque 11 est reliée à la borne positive (+ 3000 volts par exemple), tandis que la borne 10 est reliée à la borne négative (- 3000 volts par exemple) du générateur 12. Enfin, le dispositif comprend des moyens réglables de comptage 13, aptes à arrêter la déviation des gouttelettes, lorsqu'un nombre prédéterminé de celles-ci est parvenu dans l'alvéole choisi, tel que l'alvéole 9 par exemple. Ces moyens réglables de comptage sont constitués par un compteur 13 présentant une entrée de réglage 14 du nombre prédéterminé de gouttelettes que l'on désire introduire dans l'alvéole 9. Ce compteur est synchronisé sur la sortie du générateur ultrasonore 6 à fréquence réglable, et, dans un premier mode de réalisation du dispositif de l'invention, lorsque le nombre prédéterminé de gouttelettes est atteint, une sortie de commande 15 du compteur 13 permet de commander l'arrêt du générateur électrique d'impulsions 8, de manière à arrêter la charge électrique des gouttelettes sortant du tube capillaire 3. Les gouttelettes ne sont alors plus déviées vers l'alvéole 9, mais peuvent être recueillies dans un bac de récupération (non représenté).

Selon un second mode de réalisation du dispositif de l'invention, la sortie de commande 15 du compteur 13 n'est plus reliée au générateur 8, mais elle est reliée à une entrée de commande 16 du générateur 12, de manière à arrêter l'application de cette différence de potentiel, lorsque le nombre. prédéterminé de gouttelettes qui doivent parvenir à l'alvéole  9 est atteint. Comme précédemment, les gouttelettes n'atteignent plus l'alvéole, mais peuvent être recueillies dans un bac de récupération (non représenté). A la mise en marche du dispositif, la vitesse du jet de gouttelettes produites sous l'effet de l'onde ultrasonore peut être connue grâce à un système stroboscopique 17, constitué par exemple par une lampe strosbocopique 18, synchronisée par le signal de sortie du générateur ultrasonore 6 et associée à une photodiode 19 dont la sortie commande un compteur 20. Il est évident que la photodiode 19 ainsi que le compteur 20 pourraient être remplacés par une lunette de visée non représentée.

Le nombre de gouttelettes par seconde est égal à la fréquence F ultrasonique, mais le volume de liquide contenu  dans une goutte dépend du débit. La mesure du débit est faite par la lunette de visée en mesurant la distance L séparant deux gouttes $D = L \times F \times S$, S étant la section du tube.

Le dispositif comprend plusieurs alvéoles de réception tels que l'alvéole 9, répartis sur un transporteur 21 qui peut être constitué, par exemple, par une bande de transport entraînée par un moteur pas à pas 22. Les alvéoles peuvent être réalisés dans des plateaux 23, transportés par  la bande 21. La position de la bande du transporteur 21, ainsi que la position des plateaux 23 sont fixées grâce à des moyens de commande 24 ; ces moyens de commande comprennent un compteur 25 synchronisé par le signal de commande de la sortie 15 du compteur 13 ; une entrée 26 de réglage de ce compteur permet d'enregistrer le numéro de l'alvéole qui doit être rempli ainsi que le numéro du plateau portant cet alvéole. La sortie de ce compteur commande un circuit de synchronisation 27 dont une entrée 28 reçoit le signal de sortie d'un détecteur optoélectronique par exemple, permettant de repérer le numéro du plateau et le numéro de l'alvéole ; ce circuit de synchronisation commande, par l'intermédiaire du moteur pas à pas 22, le déplacement en translation de la bande du transporteur 21, de manière à amener le plateau choisi sur la trajectoire des gouttelettes ; ce circuit de synchronisation commande également un moteur pas à pas 29 qui commande la rotation du plateau ainsi positionné, de manière à placer l'alvéole qui doit réceptionner les gouttelettes sur la trajectoire de celles-ci. Le moteur 29 peut être bien entendu associé à un dispositif (non représenté), permettant d'assurer un déplacement du plateau dans une direction verticale, de manière à faciliter la rotation de celui-ci. Ainsi, l'alvéole qui doit réceptionner un nombre prédéterminé de gouttelettes, fixé par le compteur 13, est correctement positionné.

Le dispositif qui vient d'être décrit permet de remplir un très grand nombre d'alvéoles, en un temps très court. Le nombre de gouttelettes qui parvient à chaque alvéole étant très précis, il en résulte que la quantité de liquide introduite dans chaque alvéole est très précise. Ce dispositif permet de remplir des alvéoles avec une précision volumique voisine de 0,5 %. De plus, les gouttelettes ne rebondissent pas sur les plateaux dans lesquels sont formés les alvéoles.

REVENDICATIONS

1. Dispositif microdoseur de liquides, caractérisé en ce qu'il comprend un réservoir étanche contenant le liquide à doser, un tube capillaire à orifice calibré, alimenté par ce réservoir, des moyens d'alimentation réglables du réservoir en fluide gazeux sous pression, un transducteur ultrasonore transmettant des vibrations ultrasonores au tube capillaire, un générateur ultrasonore à fréquence réglable alimentant ce transducteur, la pression dans le réservoir et la dimension de l'orifice permettant d'obtenir des gouttelettes de volume prédéterminé, des moyens pour charger électriquement les gouttelettes de liquide issues du tube capillaire et des moyens électriques de déviation de ces gouttelettes en direction d'au moins un alvéole de réception, et des moyens réglables de comptage aptes à arrêter la déviation des gouttelettes lorsqu'un nombre prédéterminé de celles-ci est parvenu dans ledit alvéole.

2. Dispositif microdoseur de liquides selon la revendication 1, caractérisé en ce que les moyens réglables de comptage sont constitués par un compteur présentant une entrée de réglage dudit nombre prédéterminé de gouttelettes et une sortie de commande desdits moyens pour charger électriquement les gouttelettes, pour arrêter cette charge lorsque le nombre prédéterminé est atteint.

3. Dispositif microdoseur de liquides, selon la revendication 1, caractérisé en ce que les moyens réglables de comptage sont constitués par un compteur présentant une entrée de réglage dudit nombre prédéterminé de gouttelettes et une sortie de commande desdits moyens électriques pour dévier les gouttelettes en direction dudit alvéole.

B 6754.3 DC

4. Dispositif microdoseur de liquides selon l'une quelconque des revendications 2 et 3, caractérisé en ce qu'il comprend une pluralité d'alvéoles de réception, répartis sur un transporteur, et des moyens de commande de la position de ce transporteur en fonction de  la position de chaque alvéole sur le transporteur et du nombre de gouttelettes devant parvenir dans chaque alvéole.

## RAPPORT DE RECHERCHE EUROPEENNE

Office européen des brevets

EP 80 40 1136

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| X | FR - A - 2 084 570 (ADLER AUTO-PRECISION LTD.)<br><br>* Revendications 1-3,14, page 34, lignes 28-37; page 35, lignes 1-19; page 36, lignes 31-37; page 37, lignes 1-8 *<br><br>-- | 1-4 | B 01 L 3/02 |
| X | THE REVIEW OF SCIENTIFIC INSTRUMENTS, vol. 42, no. 12 décembre 1971<br>ADAM et al.:"The production of equal and unequal size droplet pairs", pages 1847-1849<br><br>* Paragraphe I; figures 1,2 *<br><br>-- | 1,2 | |
| | DE - A - 2 037 427 (NATIONAL RESEARCH DEVELOPMENT CORP.)<br><br>* Revendication 1 *<br><br>-- | 4 | **DOMAINES TECHNIQUES RECHERCHES (Int. Cl. 3)**<br><br>B 01 L 3/02 |
| A | DE - A - 2 317 670 (MAGYAR TUDOMANYOS AKADEMIA KUTATASI)<br><br>-- | 1 | |
| A | FR - A - 1 206 195 (TECHNICON CHROMATOGRAPHY CORP.)<br><br>-- | 2,3 | |
| X | US - A - 3 380 584 (FULWYLER)<br><br>* Revendications 1,2; colonne 2, ligne 30 - colonne 4, ligne 54 *<br><br>---- | 1 | |

**CATEGORIE DES DOCUMENTS CITES**

X particulièrement pertinent
A arriere-plan technologique
O divulgation non-ecrite
P document intercalaire
T théorie ou principe a la base de l'invention
E demande faisant interference
D document cite dans la demande
L document cite pour d'autres raisons

& membre de la même famille, document correspondant

Le present rapport de recherche a ete etabli pour toutes les revendications

| Lieu de la recherche | Date d'achevement de la recherche | Examinateur |
|---|---|---|
| La Haye | 07-11-1980 | LAMMINEUR |

OEB Form 1503 1 06 78

BAD ORIGINAL